# EUROPEAN PATENT SPECIFICATION

(11) **EP 0 847 970 B1**
(45) Date of publication and mention of the grant of the patent: **04.08.2004**
(21) Application number: 97121121.4
(22) Date of filing: 02.12.1997
(51) Int. Cl.: C05F 17/00, D21C 5/00

(54) **Process for recovering high-yield fibrous material from residuals and excess of quickly renewed vegetables, and its use**
Verfahren zur Gewinnung von faserigem Material in hohen Ausbeuten aus Rückständen von Gemüse, und seine Verwendung
Procédé pour la récupération de matière fibreuse à haut rendement à partir de résidus et excédents de végétaux renouvelables, et son utilisation

(30) Priority: 16.12.1996 IT VA960028
(43) Date of publication of application: 17.06.1998
(73) Proprietor: COFAV S.P.A., 36028 Rossano Veneto (Vicenza) (IT)
(72) Inventor: Nicolucci, Clemente, 36028 Rossano Veneto VI (IT)
(74) Representative: De Gregori, Antonella

(56) References cited:
- EP-A- 0 060 467
- EP-A- 0 517 988
- US-A- 4 275 167

## Description

The present invention refers to the preparation of high-yield fibrous material from quickly-renewed vegetable substances or their residuals.

According to this invention, the process uses a set of innovatory methods for achieving the surprising result of making possible the industrial use of fibres contained in the residuals of annual plants, herbaceous plants, and in agricultural-food residuals and excess.

In particular, the present invention enables the use of these fibres for making paper and board, without using pollutant or toxic chemical products.

Particulary suitable for use in the process according to the invention were found to be the stalks of flax, corn, wheat, rice, barley, the extraction juices of sugar cane, depleted sugar-beet pulp, fast growing annual plants such as Kenaf, Common Millet, Hibiscus Cannabinu, Bagass, Miscanthus Sinensis, Arundo Donax, Sorghum bicolor.

The process according to the present invention prefers the use of agricultural-food residuals and vegetable excess, avoiding their dumping.

It represents a particularly important development in the production of paper because it overcomes the common prejudice of current operators in the sector, i.e. that the wood-pulp used to make paper is industrially and economically obtainable only from trees such as conifers (firs and pines), from broad-leafs (eucalyptus, birch and poplar) and from recycled.

It must be remembered that to produce one kilogram of wood-pulp for paper, 7 kg of living tree is used, in addition to large amounts of water and energy, and it is therefore easy to understand how the abovementioned prejudice affects consumption of the raw materials used to make paper.

According to a fundamental aspect of the present invention, the methods used to recover cellulose fibres contained in wood-free materials and residuals, such as herbaceous and annual plants, were prepared by taking into consideration the environmental impact of the fibrous pulps obtained.

In particular, resort to chemical reactives that could represent a problem in their elimination was avoided, and conversion and hence treatment processes not giving pollutant by-products were used.

The fibrous materials obtained with the process according to the present invention, having a high yield, are usable in making paper and board instead of high-quality selected recycled paper and board as well as cellulose fibres, such as raw semi-chemical pulps of conifers and broad-leafs.

The products obtained are suitable for the food sector, being a raw material competitive with the recycle waste papers in those sectors where the wholesomeness and good preservability of the content is required or desirable. In particular, the fibrous material obtained according to the present invention can compete with the raw semi-chemical pulp and the raw wood-pulp obtained both from broad-leaf and conifers in the packing and wrapping sectors and in those where a good level of fibrousness, rigidity and compressive strength is required, with special preference for the production of boards.

In the present description reference is made to use of the products of natural digestion of annual plants, herbaceous plants and Gramineae straws in particular.

The use of biological food digesters with food micro-organisms, like champignons, plerotus, white rot tree fungus and non-toxic tree fungi in general and their enzymes, as well as digester microfungus of herbaceous and annual plants (present in the digestion of herbivorous animals) is particularly sought-after.

These digesters make the hydrophic encrustants present in vegetable species, such as lignin and pectin, very wettable and as a last residual leave the cellulose walls of the vegetable cells, which make up the raw material usable in paper and board.

The following terms are used in the present text:
- mycelia, to generally indicate both the micro-organisms present in the digestive systems of herbivorous animals and the mycelia of airborne parasite fungi compatible with animal feed;
- biomass, to indicate all types of non-toxic natural vegetable substances susceptible to biological demolition of the lignin and/or the pectin they contain;
- compost or composter system, to indicate a bioreactor used as a biodigester of herbaceous organic substances, vegetable residuals, branches and leaves.

Mycelia incubated at a temperature approaching that of the human body on a suitable nutritive ground, such as well-kept straw, grow rapidly.

By regulating correct ventilation and very high relative humidity in the biomass contained in the composter and repeating this incubation method several times, mixtures of micro-organisms that are increasingly more active in the digestion of lignin and pectin can be selected with the obtaining of cellulose fibres that are easy to simplify.

In the process according to the invention, as defined in the claims, the biomass used is put in a composting-type mixing system in which the mycelia mix is made to grow (incubated) for a period of 5 to 15 days, re-mixing every 2-5 hours, keeping it aerated, at a temperature of between 32 and 44°C, restoring the evaporated water in order to maintain its quantity in the mix at a value of from 60% to 90%.

At the end of the incubation period, the incubated biomass is finely ground, added with the quantity of water required for correct regulation of the dry-content of the biomass to be treated in the composting plant and carefully mixed with the mass of natural fibrous material to be treated, regulating the weight ratio (dry:dry) between 1:5 and 1:20.

The action exercised by incubation is basically that of making the cellulose fibres wettable essentially converting the hydrophic material (lignin and pectin) contained in it into water and carbon dioxide.

The biological reaction of the materials is carried out continuously, by blowing air and vapour, mechanically remixing these materials at a rotation speed of between 0.5 and 2 revolutions per hour, for a period of from 12 to 48 hours, at a temperature of from 32 to 44°C and adjusting the ratio of weight between the biomass entering the composting plant and the water to a dry value of from 15% to 35% in weight.

In the preferred forms of realizing the process according to the present invention, distribution of the incubated biomass is between 50 and 200 grams per kg of material to be treated.

As the material to be treated is not diluted or dispersed in water this gives the substantial advantage of eliminating the possibility of polluting waste waters, this saving both water and energy.

The process described became faster and more efficient as the surface of the material to be treated increased, with the same weight of the same.

The biological demolishing action must be stopped before the end of decomposition of the lignin and pectin in order to stop it from going on and demolishing the same cell walls contained in the treated mass and is therefore continued unitil ensuring a digestion of from 60% to 95% of the lignin and pectin contained in the material being processed.

The operation of stopping the biological attack is carried out by sterilizing the biomass at 70-140°C for a period of from 5 to 40 minutes.

The treatment is carried out by adjusting the weight ratio between the cellulose fibres and the water to a dry value of between 5% and 30% in weight.

The presence of water and residual lignin and/or pectin inside the material undergoing elementarizing heat treatment does not jeopardize its direct use as a component of the paper pulp and does not cause greater production difficulties than use of normal of recycled paper.

The residual lignin and/or pectin have an excellent degree of wettability while maintaining the substantial insolubility in water (especially in water system purified waters) and these properties allow them to be incorporated in the paper without technical contraindications.

The raw fibre pulps obtained with the process of the present invention also have a considerably more pleasant and clearer colour than corresponding pulps obtained with traditional processes.

This characteristic is particularly advantageous when compared to the salified lignin, and/or pectin of other processes, which is soluble in water and has a dark brown colour that nearly always requires bleaching with chlorine, chlorine derivatives or hydrogen peroxide, before the product containing it can be used for making food-grade paper or board.

Sterilization of the mixture is obtained by operating as described.

Use of micelia and food micro-organisms as an only chemical reactive, resorting simply to thermo-mechanical actions of sterilization, elementarizing, grinding, thermomechanical opening, drying, sifting and breaking of the fibres, gives a fibrous material without generating pollutant products, with low energy costs and without using chemical reactives.

This fibrous material is obtained without the need for sophisticated and expensive means for preventing pollution consequential to the generation of solutes in the process waters, typical of other production procedures for chemical pulps and semicellulose.

Because of its high cellulose-fibre content, this material is used to produce paper and board and its product moisture content is regulated according to its subsequent use.

The fibrous pulp obtained in the manner described has excellent physical-mechanical characteristics, comparable to those of a good product of recycled material obtainable from high-quality boxes.

The process according to the present invention also has the characteristic of having a positive environmental balance, or of reducing environmental pollution instead of increasing it.

It therefore opens up a new direction of research in the paper sector, bringing it closer to the environment.

In the preferred forms of realizing the process according to the invention, the operations of elementarizing, sterilizing and drying can be carried out in a single stage, in an overheated-jacket continuous pulper, at a temperature even higher than 200°C. In this case the contact time of the material on the wall must be no more than just a few seconds for each contact, in order to prevent carbonatation phenomena.

In a preferred form of realizing the present invention, the dried biomass is preferably placed in a rotating needle and counter-needle system which enables its breaking, as occurs for the residuals of fabrics that are ground in order to allow the textile fibres contained therein to be recovered and re-used.

Another fundamental aspect of the process according to the present invention consists in the fact that the not elementarized knots and residuals bodies of the treated vegetable materials are separated from the mass being processed and recycled, without contributing the production of pollutant waste waters.

The ground material can be purified with air cyclones, which remove the coarse particles and residual wooden bunches.

For storage and transport, the fibrous pulp obtained from the digested biomass must be cooked-sterilized, elementarized, dried, broken and cleaned.

For the immediate use in making paper and board, the digested biomass is cooked, elementarized, put in a thick pulp purifier, of the type used for purifying pulps consequential to the use of post consumer recycled paper.

The biomass is then refined with a double-disk refiner and sent to the paper or board production line where it is further sifted with the introduction of a purifying system (removal of coarse particles and residual wooden bunches) for draft separation.

This treatment allows the saving of water and energy, keeping the paper fibres integral, without reducing the physical-mechanical characteristics.

The process of preparing high-yield fibrous material from a vegetable material selected from annual plants, herbaceous plants, agricultural-food or their residuals according to the present invention is caracterized by the following operations:
a) the biomass is put in a composting-type mixing system in which the mycelia mix is incubated for a period of 5-15 days, remixing every 2-5 hours, keeping it aerated, and with dry-content of between 10% and 40% in weight, at a temperature of between 32 and 44°C, adding water to maintain its quantity in the mix at a value from 60% to 90%;
b) the incubated biomass is finely ground, added with water to adjust its content to a dry value of from 15% to 30% by wt. and mixed for 12-48 hours with the vegetable material to be treated in a weight ratio of from 1:5 to 1:20, to ensure a digestion of from 60% to 95% of the contained lignin and/or pectin;
c) said digestion is then stopped by adjusting the dry value of the incubated biomass to 5% to 30% by wt. and by sterilizing at 70° to 140°C for 5 to 40 minutes;
d) the sterilized material is then dried until obtaining a fibre/water weight ratio of between 50% and 92%.

In addition to having a higher yield than those pulps obtained with other well-known chemical or chemical-thermo-mechanical processes, the raw fibrous pulps obtained by operating as described above offer lower energy consumption, lower water consumption, total elimination of ancillary chemical products, at the same time allowing the recovery of agricultural-food byproduct vegetable residuals and excess.

If high amounts of pectin are present in the material being processed according to the present invention, e.g. when working with depleted sugar-beet residuals that contain up to 29% pectin and only 3% lignin, stages c) and d) of the process are modified in the following way: in stage c) digestion of the vegetable material is stopped by means of sterilization, operating at a temperature of from 70 to 140°C for a period of from 5 to 40 minutes, regulating the input humidity percentage to a dry value of between 5% and 35% in weight; and in stage d) after the sterilization, this vegetable material is cooked for a few minutes at a pulp temperature of from 70 to 140°C.

Cooking of the vegetable material can also be done by contact with surfaces overheated to temperatures of from 180-280°C, making sure that, each time, contact of the material with overheated walls is limited to periods of less than 5 seconds, by constantly removing it.

After coooking, the vegetable material is elementarized by resorting to an opener-disperser, operating with high density, preferably between 10% and 25% in weight, with a rotor speed of about 1 revolution per second, at an optimum temperature of from 80 to 92°C.

If the vegetable prepared as described is used in a place far from where it was produced or long after its preparation, the dry-content should be at least from 70% to 92% in weight.

The dry-content recommended for waiting times of more than 20 days is from 82% to 92% in weight.

## Claims

1. Process for preparing high-yield fibrous material from a vegetable material selected from annual plants, herbaceous plants, agricultural-food or their residuals **characterized by** the following operations:
a) placing a biomass in a composting-type mixing system in which a mycelia mix is incubated for a period of 5-15 days, remixing every 2-5 hours, keeping it aerated, and with dry-content of between 10% and 40% in weight, at a temperature of between 32 and 44°C, adding water to maintain its quantity in the mix at a value from 60% to 90%;
b) finely grounding the incubated biomass, adding water to adjust its content to a dry value of from 15% to 30% by wt. and mixing for 12-48 hours with the vegetable material to be treated in a weight ratio of from 1:5 to 1:20, to ensure a digestion of from 60% to 95% of the contained lignin and/or pectin;
c) stopping said digestion by adjusting the dry value of the incubated biomass to 5% to 30% by wt. and by sterilizing at 70° to 140°C for 5 to 40 minutes;
d) drying then the sterilized material until obtaining a fibre/water weight ratio of between 50 and 92.

2. Process as per claim 1 wherein said vegetable material is selected from stalks of flax, corn, wheat, rice, barley, extracting juices of sugar cane, depleted sugar-beet pulp, Kenaf, Common Millet, Hibiscus Cannabinu, Bagass, Miscanthus Sinensis, Arundo Donax, Sorghum bicolor.

3. Process as per claim 1 whereby in the stage d) said sterilized material is dried to a fiber/water ratio of from 70% to 92% in weight placing it in contact with a surface overheated to 180-280°C for less than 5 seconds.

4. Process as per claim 3 whereby the vegetable material of stage d) is treated in an opener-dispenser device at a rotor speed of about 1 revolution per second, at a temperature of between 80 and 92°C.

5. Process for producing paper and board whereby the high yield fibrous material obtained as per claim 1 is used as celulose fibre.

## Revendications

1. Procédé de préparation d'un matériau fibreux à haut rendement à partir d'un matériau végétal choisi parmi des plantes annuelles, des plantes herbacées, des denrées alimentaires agricoles ou de leurs déchets, **caractérisé par** les opérations suivantes :
a) placer une biomasse dans un système de mélange de type compostage dans lequel un mélange de mycélium est mis à incuber pendant une période de 5 à 15 jours, mélanger toutes les 2 à 5 heures, la maintenir aérée et présentant une teneur en matière sèche comprise entre 10% et 40% en poids, à une température comprise entre 32 et 44°C, ajouter de l'eau pour maintenir sa quantité dans le mélange à une valeur allant de 60% à 90% ;
b) broyer finement la biomasse ayant incubée, ajouter de l'eau pour ajuster sa teneur à une valeur sèche de 15% à 30% en poids et mélanger pendant 12 à 48 heures avec le matériau végétal à traiter suivant un rapport pondéral allant de 1:5 à 1:20 en vue d'assurer une digestion de 60% à 95% de la lignine et/ou de la pectine contenue ;
c) arrêter ladite digestion en ajustant la valeur sèche de la biomasse incubée de 5% à 30% en poids et en stérilisant à la température de 70° à 140° C pendant 5 à 40 minutes ;
d) sécher alors le matériau stérilisé jusqu'à l'obtention d'un rapport pondéral fibre/eau compris entre 50 et 92.

2. Procédé selon la revendication 1 dans lequel ledit matériau végétal est sélectionné parmi les tiges de lin, de blé, d'avoine, de riz, d'orge, les jus d'extraction de sucre de canne, la pulpe écrasée de betterave à sucre, le Kenaf, le millet commun, l'Hibiscus Cannabinu, la Bagasse, le Miscanthus Sinensis, l'Arundo Donax, le Sorgho bicolore.

3. Procédé selon la revendication 1 dans lequel dans l'étape d) ledit matériau stérilisé est séché à un rapport fibre/eau de 70% à 92% en poids en le mettant en contact avec une surface surchauffée de 180 à 280°C pendant moins de 5 secondes.

4. Procédé selon la revendication 3 dans lequel le matériau végétal de l'étape d) est traité dans un dispositif de loup ouvreur-distributeur à une vitesse de rotor d'environ 1 tour par seconde, à une température comprise entre 80 et 92°C.

5. Procédé de production de papier et de carton selon lequel le matériau fibreux à haut rendement obtenu selon la revendication 1 est utilisé comme fibre de cellulose.

## Patentansprüche

1. Verfahren zur Herstellung von fasrigem Material in hoher Ausbeute aus einem Pflanzenmaterial, ausgewählt aus Jahrespflanzen, krautartigen Pflanzen, landwixtschaftlichem Futter oder deren Rückständen, **gekennzeichnet durch** die folgenden Schritte:
a) Platzieren von Biomasse in einem Mischsystem des Kompostertyps, in welchem ein Myceliagemisch für eine Dauer von 5 bis 15 Tagen inkubiert wird, erneutes Mischen alle zwei bis fünf Stunden, mit Luft Durchsetzthalten bei einem Trockengehalt zwischen 10 und 40 Gew.-% bei einer Temperatur zwischen 32 und 44°C, Zugeben von Wasser, um dessen Menge in dem Gemisch auf einem Wert von 60% bis 90% zu halten;
b) feines Mahlen der inkubierten Biomasse, Zugeben von Wasser, um deren Gehalt auf einen Trockenwert von 15 bis 30 Gew.-% einzustellen und Mischen für 12 bis 48 Stunden mit dem zu behandelnden Pflanzenmaterial in einem Gewichtsverhältnis von 1:5 bis 1:20, um eine Digestion von 60% bis 95% des enthaltenen Lignins und/oder Pektins sicherzustellen;
c) Stoppen der Digestion **durch** Einstellen des Trockenwerts der inkubierten Biomasse auf 5 bis 30 Gew.-% und **durch** Sterilisieren bei 70° bis 140°C für 5 bis 40 Minuten;
d) dann Trocknen des sterilisierten Materials, bis ein Faser/Wasser-Gewichtsverhältnis zwischen 50 und 92 erhalten wird.

2. Verfahren gemäß Anspruch 1, wobei das Pflanzenmaterial ausgewählt ist aus Strünken von Flachs, Mais, Weizen, Reis, Gerste, Extraktsäften von Zuckerrohr, entsaftetem Zuckerrübenbrei, Kenaf, gemeiner Hirse, Hibiskus Cannabinu, Bagasse, Miscanthus Sinensis, Arundo Donax, zweifarbigem Sorghum.

3. Verfahren gemäß Anspruch 1, wobei in Schritt d) das sterilisierte Material auf ein Faser/Wasserverhältnis von 70% bis 92% getrocknet wird durch Kontaktieren mit einer auf 180-280°C erhitzten Oberfläche für weniger als 5 Sekunden.

4. Verfahren gemäß Anspruch 3, wobei das Pflanzenmaterial von Schritt d) in einer Öffner-Spendervorrichtung bei einer Rotorgeschwindigkeit von etwa einer Umdrehung pro Sekunde bei einer Temperatur zwischen 80 und 92°C behandelt wird.

5. Verfahren zur Herstellung von Papier und Pappe, wobei das fasrige Material in hoher Ausbeute, erhalten nach Anspruch 1, als Cellulosefaser verwendet wird.
